# EUROPÄISCHE PATENTSCHRIFT

(11) **EP 2 803 508 B1**
(45) Veröffentlichungstag und Bekanntmachung des Hinweises auf die Patenterteilung: **06.04.2016**
(21) Anmeldenummer: 14001589.2
(22) Anmeldetag: 06.05.2014
(51) Int. Cl.: B60D 1/48

(54) **Trägeranordnung für eine Anhängekupplung oder einen Lastenträger mit Hakenkonturen**
Support arrangement for a trailer coupling or a load carrier with hook contours
Agencement de support pour un attelage ou un support de charge ayant un contour à crochet

(30) Priorität: 08.05.2013 DE 102013008325
(43) Veröffentlichungstag der Anmeldung: 19.11.2014
(73) Patentinhaber: WESTFALIA - Automotive GmbH, 33378 Rheda-Wiedenbrück (DE)
(72) Erfinder: Angermann, Kay, D-04720 Döbeln (DE)
(74) Vertreter: Patentanwälte Bregenzer und Reule Partnerschaftsgesellschaft mbB

(56) Entgegenhaltungen:
- WO-A1-2009/072939
- DE-A1-102009 051 154
- DE-U1- 29 818 807
- US-A1- 2011 109 063

## Beschreibung

Die Erfindung betrifft eine Trägeranordnung für eine Anhängekupplung oder einen Lastenträger, als Bauteile umfassend einen Querträger und mindestens eine an dem Querträger angeordnete Halterung für eine Anhängekupplung oder für ein Kupplungsteil eines Lastenträgers und gegebenenfalls mit dem Querträger verbundene Seitenträger zur Montage an einem Heck einer Karosserie eines Fahrzeugs.

In der nicht vorveröffentlichten deutschen Patentanmeldung DE 10 2011 122 468.1 ist beschrieben, einen Querträger mit Seitenträgern anhand von Biegeelementen zu verbinden. Bei einem Fahrbetrieb können jedoch Belastungen auftreten, die zu einer Lockerung der Verbindung zwischen den miteinander durch die Biegeelemente verbundenen Bauteile, nämlich beispielsweise dem Querträger und den Seitenträgern, führt.
In der US 2011/0109063 A1 ist ein gattungsgemäßer Querträger gezeigt.
Davon ausgehend ist es die Aufgabe der vorliegenden Erfindung, eine verbesserte Verbindung von Bauteilen einer Trägeranordnung zu schaffen.

Zur Lösung der Aufgabe ist bei einer Trägeranordnung der eingangs genannten Art vorgesehen, dass mindestens zwei der Bauteile der Trägeranordnung oder mindestens zwei von deren Bauteilkomponenten durch eine Steckverbindung miteinander verbunden sind, wobei ein vor das eine Bauteil oder die eine Bauteilkomponente vorstehender Steckvorsprung in eine Steckaufnahme des anderen Bauteils oder der anderen Bauteilkomponente eingreift und der Steckvorsprung und die Steckaufnahme Hakenkonturen zum Verhaken des Steckvorsprungs in der Steckaufnahme aufweisen.

Es ist ein Grundgedanke der vorliegenden Erfindung, dass die miteinander zu verbindenden Bauteile, beispielsweise der Querträger mit den Seitenträgern, sozusagen durch Hakenkonturen miteinander verhakt werden. Dadurch ist ein zugfester Halt des einen Bauteils am anderen Bauteil quer zur Steckachse, entlang derer die Hakenkonturen in Eingriff bringbar sind, möglich.

Es können also beispielsweise die Seitenträger mit dem Querträger erfindungsgemäß verbunden sein. Es ist aber auch möglich, dass beispielsweise der Querträger oder die Seitenträger mehrteilig sind, also Bauteilkomponenten, zum Beispiel Pröfilkörperabschnitte, aufweisen, die auf die erfindungsgemäße Weise miteinander verbunden werden. In der nachfolgenden Beschreibung wird zwar das Wort "Bauteil" verwendet, wobei die Erläuterungen sinngemäß aber auch für die Verbindung zwischen Bäuteilkomponenten gelten.

Der Steckvorsprung und ein Grundkörper des einen Bauteils, an dem der Steckvorsprung angeordnet ist, sind zweckmäßigerweise integral und einstückig. Beispielsweise ist der Steckvorsprung aus dem Grundmaterial des Bauteils, aus dem der Grundkörper besteht, durch Schneiden, insbesondere Laserschneiden, Stanzen oder dergleichen gebildet. Der Steckvorsprung und die Steckaufnahmen können auf einfache Weise durch beispielsweise Stanzen, Schneiden, thermische Trennverfahren, beispielsweise Laserschneiden oder dergleichen, aus demselben Material wie ein Grundkörper des Bauteils, an dem sie jeweils angeordnet sind, hergestellt werden.

Bei der nachfolgenden Beschreibung werden jeweils ein Steckvorsprung und eine Steckaufnahme erläutert. Selbstverständlich ist es vorteilhaft, wenn die erfindungsgemäße Steckverbindung mehrfach vorhanden ist, das heißt dass die Bauteile mit mehreren erfindungsgemäßen Steckverbindungen miteinander verbunden sind. Beispielsweise ist es vorteilhaft, wenn mindestens zwei erfindungsgemäße Steckvorsprünge und zwei Steckaufnahmen nebeneinander vorgesehen sind, so dass die Steckverbindung sozusagen paarweise vorhanden ist. Dabei ist es möglich, dass beide Bauteile beispielsweise jeweils einen Steckvorsprung und eine Steckaufnahme aufweisen oder dass die Steckvorsprünge am einen Bauteil und die Steckaufnahmen am anderen Bauteil vorgesehen sind.

Das Bauteil, das den mindestens einen Steckvorsprung aufweist, umfasst vorteilhaft einen Grundkörper, mit dem der mindestens eine Steckvorsprung integral und einstückig ist. Beispielsweise ist der Steckvorsprung aus dem Grundkörper oder einem den Grundkörper bildenden Basiskörper, zum Beispiel einem Profilkörper, ausgeschnitten oder ausgestanzt.

Der Steckvorsprung umfasst beispielsweise einen Längsschenkel und mindestens einen, vorzugsweise mehrere, quer zu dem Längsschenkel angeordnete und davon seitlich abstehende Hakenschenkel. Die Steckaufnahme ist dazu komplementär ausgestaltet, d.h. sie hat eine Längsaufnahme für den Längsschenkel und eine Hakenaufnahme für den Hakenschenkel. Die Längsaufnahme und die Hakenaufnahme verlaufen ebenfalls quer zueinander. Vorteilhaft ist es, wenn der Hakenschenkel und der Längsschenkel rechtwinkelig zueinander sind. Bevorzugt ist es, wenn der mindestens eine Hakenschenkel an einem freien Endbereich des Steckvorsprungs vorgesehen ist.

Es ist vorteilhaft, wenn eine beispielsweise T-förmige Konfiguration gegeben ist. Zweckmäßigerweise sind beispielsweise am Längsabschnitt oder Längsschenkel des Steckvorsprungs zwei Hakenschenkel einander entgegengesetzt angeordnet.

Ein Außenumfang des Steckvorsprungs, beispielsweise im Bereich seines freien Endes, weist zweckmäßigerweise eine Rundung auf. Auf diese Weise können der Steckvorsprung und die Steckaufnahme, die zweckmäßigerweise ebenfalls eine Rundung aufweist, leicht in Eingriff miteinander gebracht werden.

Der Steckvorsprung umfasst beispielsweise einen oder mehrere Zapfen, während die Steckaufnahme dazu komplementär eine oder mehrere Zapfenaufnahmen aufweist. Der Steckvorsprung umfasst zweckmäßigerweise einen oder mehrere Halteköpfe, die in der Art eines Zapfens eines Puzzleteils ausgestaltet sind. Die Steckaufnahme umfasst eine dazu passende Puzzleteil-artige Steckaufnahme.

Der Steckvorsprung hat zweckmäßigerweise eine plattenartige oder stangenartige Gestalt. Beispielsweise bildet der Steckvorsprung einen plattenartige oder stangenartigen Verbindungsflansch.

Eine zusätzliche formschlüssige Verbindung zwischen der Steckaufnahme und dem Steckvorsprung ist vorteilhaft. Abseits der Hakenkonturen sind zweckmäßigerweise an der Steckaufnahme und dem Steckvorsprung Formschlusskonturen eines Formschlusspaars angeordnet. Beispielsweise befinden sich die Formschlusskonturen am Fußbereich des Steckvorsprungs, wo dieser mit dem Bauteil, von dem er absteht, verbunden ist. Bei der Steckaufnahme ist es vorteilhaft, wenn an einem freien Endbereich, von dem her der Steckvorsprung eingesteckt werden kann, eine entsprechende Formschlusskontur vorgesehen ist. Die Formschlusskonturen ermöglichen einen Halt der miteinander durch die Steckverbindung verbundenen Bauteile quer zu der Steckachse, entlang derer die Hakenkonturen in Eingriff bringbar sind bzw. in Eingriff gebracht worden sind.

Der Steckvorsprung bildet zweckmäßigerweise einen Bestandteil einer Biegelasche, die mindestens zwei zueinander winkelige Laschenabschnitte aufweist. Die Biegelasche kann auch einen gekrümmten oder bogenförmigen Krümmungsabschnitt aufweisen sowie einen Laschenabschnitt. Selbstverständlich sind auch Kombinationen möglich, d.h. dass die Biegelasche beispielsweise mehrere zueinander winkelige Laschenabschnitte und/oder Krümmungsabschnitte aufweist. In der Seitenansicht kann die Biegelasche beispielsweise L-förmig oder U-förmig sein.

Es ist vorteilhaft, wenn der Steckvorsprung und die Steckaufnahme mindestens ein Paar quer zu der Steckachse, entlang derer die Hakenkonturen ineinander einsteckbar sind, verlaufende Kontaktflächen aufweisen, die einander gegenüberliegen, wenn der Steckvorsprung in die Steckäufnahme eingesteckt sind. Dann befinden sich die Hakenkonturen beispielsweise in Hintergriff miteinander. Entlang der Steckachse sind also die Hakenkonturen in Hintergriff miteinander bringbar.

Die Kontaktflächen verlaufen beispielsweise schräg zu der Steckachse. Die Kontaktflächen können auch eine Stufenanordnung ausbilden, d.h. dass beispielsweise quer zur Steckachse orientierte Kontaktflächen vorhanden sind.

Der Steckvorsprung weist zweckmäßigerweise mindestens eine nicht rechtwinkelig schräg zu einer nicht in Kontakt mit der Steckaufnahme kommenden Oberfläche verlaufende und/oder eine an einer Stufe gebildete Kontaktfläche auf. Die Steckaufnahme weist zu dieser Kontaktfläche eine Gegenkontaktfläche auf, die zu der Kontaktfläche komplementär ist.

Die großen Kontaktflächen tragen dazu bei, dass der Steckvorsprung mit der Steckaufnahme in relativ großflächigen Kontakt gelangt. Diese Maßnahme ist insbesondere mit der nachfolgend diskutierten stoffschlüssigen Verbindung zwischen dem Steckvorsprung und der Steckaufnahme zweckmäßig, weil nämlich eine relativ große Fügefläche zwischen den miteinander durch die Steckverbindung verbundenen Bauteilen vorhanden ist, die sich für eine zusätzliche Verbindung mit beispielsweise eines Niets, einer Schraube oder auch einem stoffschlüssig verbindenden Verbindungsmaterial eignet. Die lokalen Belastungen des Fügebereichs zwischen Steckvorsprung und Steckaufnahme werden dadurch verringert. Es ergibt sich eine homogene Kraftübertragung.

Der mindestens eine Steckvorsprung ist vorteilhaft durch eine zusätzliche Verbindung, z.B. durch ein Niet, eine Schraube oder dergleichen andere eine zusätzliche formschlüssige Komponente umfassenden Verbindung und/oder eine stoffschlüssige Verbindung mit dem anderen Bauteil verbunden. Beispielsweise ist der Steckvorsprung zusätzlich geklebt, geschweißt oder dergleichen. Auch eine Lötverbindung, insbesondere eine Hartlötverbindung, ist ohne weiteres vorteilhaft. Bei den Schweißverbindungen ist es beispielsweise möglich, dass der Steckvorsprung mittels eines Widerstandsschweißens, z.B. Punktschweißens, mit dem anderen Bauteil verbunden ist. Aber auch eine Verschweißung mit Schweißzusatzwerkstoffen, z.B. Material eines Schweißdrahts, ist vorteilhaft.

Der Steckvorsprung ist beispielsweise an dem Querträger angeordnet und dient zur Verbindung mit dem Seitenträger oder der Halterung. Der mindestens eine Steckvorsprung kann aber auch am Seitenträger angeordnet sein und vor diesen zum Querträger hin vorstehen.

Es ist auch möglich, dass beispielsweise die Halterung für die Anhängekupplung oder das Kupplungsteil des Lastenträgers anhand einer oder mehrerer Steckvorsprünge mit beispielsweise dem Querträger verbunden ist. Weiterhin kann auch der Seitenträger oder der Querträger mehrteilig sein und anhand einer erfindungsgemäßen Steckverbindung verbunden bzw. verhakt sein.

An dieser Stelle sei bemerkt, dass selbstverständlich eine Verbindung zwischen zwei Bauteilen der erfindungsgemäßen Trägeranordnung auch andere Verbindungskomponenten, zum Beispiel Biegelaschen, Schrauben, Schweißverbindungen oder dergleichen umfassen kann.

Mindestens eines der Bauteile umfasst zweckmäßigerweise einen Profilkörper, beispielsweise mit einem polygonalen, z.B. rechteckigen, oder runden Querschnitt.
- Figur 1: eine perspektivische Schrägansicht einer ersten Trägeranordnung von in Fahrtrichtung links oben,
- Figur 2: ein Detail der Trägeranordnung gemäß Figur 1, wobei ein Seitenträger und ein Querträger noch nicht miteinander verbunden sind,
- Figur 3: eine frontale Draufsicht von oben auf die Trägeranordnung gemäß Figuren 1 und 2 mit noch nicht miteinander verbundenen Bauteilen,

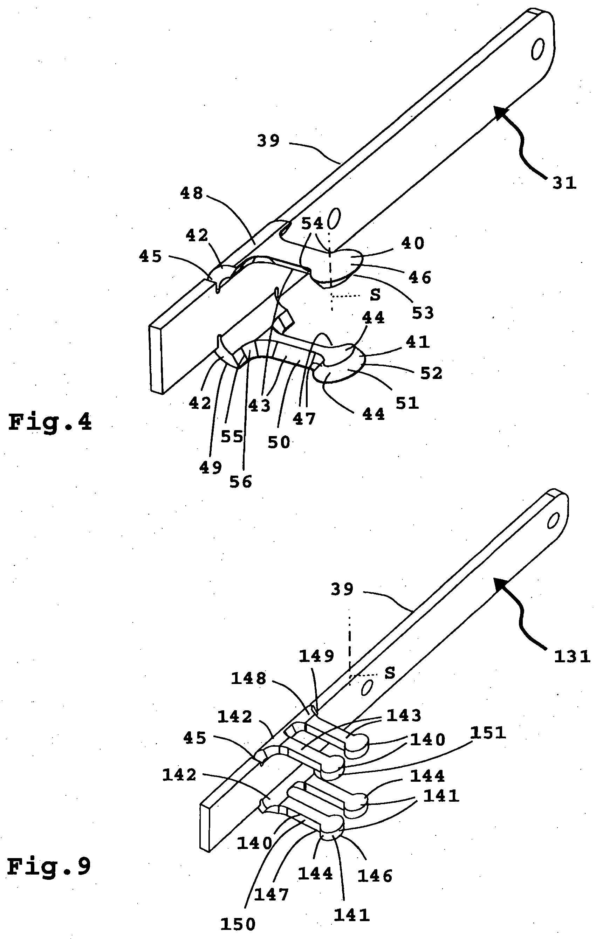

- Figur 4: eine perspektivische Schrägansicht eines Seitenträgers der Trägeranordnung gemäß Figuren 1-3 von rechts,

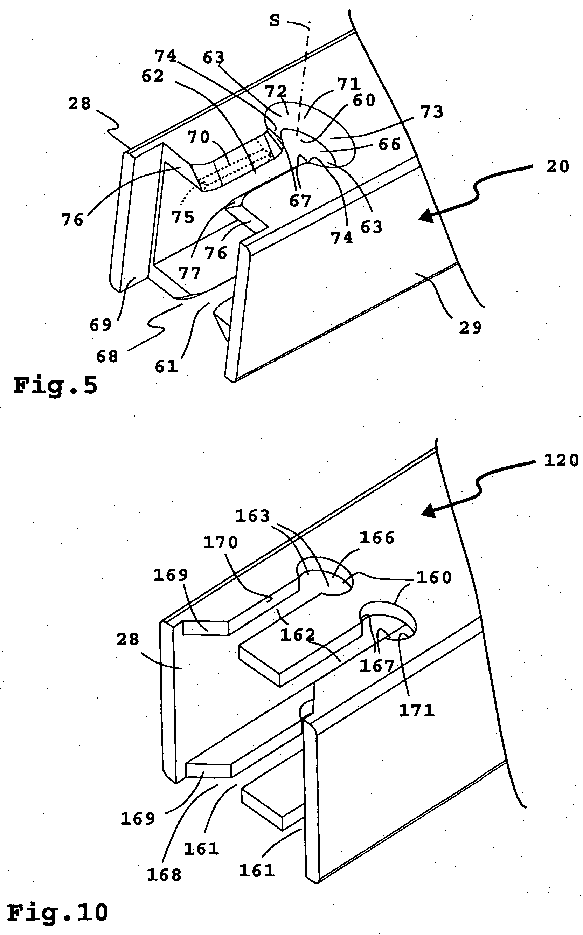

- Figur 5: ein Detail des Querträgers gemäß Figur 2 etwas vergrößert,
- Figur 6: eine perspektivische Schrägansicht einer zweiten Trägeranordnung von in Fahrtrichtung links oben,
- Figur 7: ein Detail der Trägeranordnung gemäß Figur 6, wobei ein Seitenträger und ein Querträger noch nicht miteinander verbunden sind,
- Figur 8: eine frontale Draufsicht auf die Trägeranordnung gemäß Figuren 6 und 7 mit noch nicht miteinander verbundenen Bauteilen,
- Figur 9: eine perspektivische Schrägansicht eines Seitenträgers der Trägeranordnung gemäß Figuren 6-8 von rechts, und
- Figur 10: ein Detail des Querträgers gemäß Figur 7 etwas vergrößert.

Trägeranordnungen 10, 110 dienen zur Befestigung einer Anhängekupplung 90 und/oder eines schematisch angedeuteten Lastenträgers 95. Die Trägeranordnungen 10, 110 sind an einer Karosserie 101 eines Kraftfahrzeugs 100 befestigbar oder befestigt, beispielsweise an dessen Heck 102. Von dem Kraftfahrzeug 100 sind exemplarisch Räder 103 dargestellt. Das Kraftfahrzeug 100 ist beispielsweise ein Personenkraftwagen, insbesondere mit einem Verbrennungsmotor und/oder einem Elektromotor. In der nachfolgenden Beschreibung sind gleiche oder ähnliche Komponenten in der Regel mit denselben Bezugsziffern versehen, teilweise zur Verdeutlichung von Unterschieden mit um jeweils 100 verschiedenen Bezugsziffern.

Die Trägeranordnungen 10 und 110 sind zweckmäßigerweise hinter einem Stoßfänger des Kraftfahrzeugs 100 verborgen. Die Trägeranordnungen 10, 110 haben Querträger 20, 120, die sich entlang des Hecks 102 in Fahrzeugquerrichtung des Kraftfahrzeugs 100 erstrecken. Die Querträger 20-120 werden von Seitenträgern 30, 31 sowie Seitenträgern 130 und 131 gehalten, die sich jeweils in Fahrzeuglängsrichtung des Kraftfahrzeugs 100 erstrecken. Die Seitenträger 30-131 sind beispielsweise mit der Karosserie 101 verschraubt, wofür Durchtrittsöffnungen 32 an den Seitenträgern 30-131 vorgesehen sind, durch die Schrauben (nicht dargestellt) durchgesteckt und mit der Karosserie 101 verschraubbar sind.

An den Querträgern 20, 120 sind beispielsweise Halterungen 11 für die Anhängekupplung 90 angeordnet. Die Halterungen 11 umfassen beispielsweise eine Halteaufnahme 12, in die ein Steckende 92 eines Kupplungsartns 91 der Anhängekupplung 90 einsteckbar ist. Am Kupplungsarm 91 befindet sich noch ein Kuppelstück 93, zum Beispiel eine Kupplungskugel, zum Ankuppeln eines Anhängers. Anstelle der Halterungen 11 könnte auch beispielsweise eine Lagereinrichtung zum beweglichen Lagern einer Anhängekupplung, beispielsweise zum Schwenken und/oder linearen Verschieben eines Kupplungsarms, vorgesehen sein, so dass der Kupplungsarm zwischen einer nach hinten vor das Heck 102 vorstehenden Gebrauchsstellung und einer beispielsweise hinter den Stoßfänger des Kraftfahrzeugs 100 zurück geschwenkten, verborgenen Nichtgebrauchsstellung beweglich ist, beispielsweise manuell betätigbar und/oder motorisch betätigbar. Ferner eignen sich die Trägeranordnungen 10, 110 auch für fest montierte Kupplungsarme.

An den Querträgern 20, 120 können auch Halterungen 13 zum Halten des Lastenträgers 95 vorgesehen sein. Die Halterungen 13 umfassen beispielsweise Steckaufnahmen, in die Steckvorsprünge 96 des Lastenträgers 95 einsteckbar sind. Der Lastenträger 95 hat beispielsweise eine nicht dargestellte Tragplattform und/oder Tragelemente zum Tragen einer Last, zum Beispiel Rinnen zum Tragen eines Fahrrads. Bei dem Lastenträger 95 kann es sich beispielsweise um einen Fahrradträger handeln.

Die Trägeranordnungen 10, 110, insbesondere die Querträger 20-120 und die Seitenträger 30, 31, 130, 131 bestehen zweckmäßigerweise aus Metall, insbesondere Stahl oder Aluminium. Zweckmäßigerweise sind diese Komponenten aus Blech hergestellt.

Die Querträger 20, 120 weisen beispielsweise einen mittleren Abschnitt 21, an dem die Halterung 11 angeordnet ist, sowie sich zwischen dem mittleren Abschnitt 21 und den Seitenträgern 30, 31, 130, 131 erstreckende seitliche Abschnitte 22 auf. Die Längsenden 23 und 24 der Abschnitte 22 sind mit den Seitenträgern 30, 31, 130, 131 verbunden, wobei bei den einzelnen Ausführungsbeispielen teilweise an jedem Längsende 23 oder 24 unterschiedliche Verbindungstechniken erläutert sind, um im Rahmen der Erfindung liegende Möglichkeiten aufzuzeigen.

Die Seitenträger 30 und 31 sind beispielsweise plattenartig, wobei selbstverständlich auch Profile, beispielsweise Rundprofile oder Mehrkantprofile ohne weiteres möglich sind. Die Seitenträger 30 und 31 umfassen z.B. Wände 39.

Die Seitenträger 30 und 31 sowie die Seitenträger 130 und 131 sind gleichartig und symmetrisch aufgebaut, wobei auch eine andere, unsymmetrische Konstruktion möglich wäre.

Die Seitenträger 30, 31 sind mit dem Querträger 20 anhand von hakenartigen Steckverbindungen verbunden, wobei jeweils zwei Steckvorsprünge 40, 41 der Seitenträger 30, 31 in korrespondierende Steckaufnahmen 60 und 61 am Querträger 20 eingreifen. Die Steckaufnahmen 60 und 61 sind an einer oberen Wand 26 und einer unteren Wand 27 des Querträgers 20 vorgesehen.

Zwischen der oberen und der unteren Wand 26, 27 erstreckt sich eine in Fahrtrichtung vordere Wand 28 sowie eine in Fahrtrichtung hintere Wand 29. Mithin ist also der Querträger 20 von einem Profilrohr gebildet, das gewisse Krümmungen zur Ausbildung der Abschnitte 21-22 aufweist. Darauf kommt es jedoch nicht im Wesentlichen an. Das Profilrohr könnte auch einen polygonalen oder runden Querschnitt oder beides haben.

Die Steckvorsprünge 40, 41 stehen von einer oberen und einer unteren Schmalseite der Wand 39 des Seitenträgers 30, 31 zum Querträger 20 vor. Die Steckvorsprünge 40, 41 umfassen Krümmungsabschnitte 42, von denen sich Längsschenkel 43 der Steckvorsprünge 40, 41 weg erstrecken. Die Krümmungsabschnitte 42 weisen beispielsweise eine Krümmung von etwa 90° auf, wobei selbstverständlich auch andere Krümmungswinkel möglich wären. Mithin sind also die Steckvorsprünge 40 und 41 zur Wand 39 etwa rechtwinkelig bzw. stehen rechtwinkelig von derselben ab.

An den vorderen, freien Endbereichen der Längsschenkel 43 der Steckvorsprünge 40 und 41 stehen jeweils seitlich Hakenschenkel 44 ab, so dass eine in Draufsicht etwa T-förmige Kontur gebildet ist. Der freie Endbereich bildet sozusagen einen Zapfenkopf 46 aus. Zwischen dem Längsschenkel 43 und den Hakenschenkeln 44 ist jeweils eine Hakenkontur 47 ausgebildet.

Die Steckaufnahmen 60 und 61 haben zu den Außenumfängen der Steckvorsprünge 40 und 41 komplementäre, formschlüssig aufnehmende Innenkonturen.

Die Steckaufnahmen 60 und 61 haben jeweils eine schlitzartige Längsaufnahme 62, die zur Aufnahme der Längsschenkel 43 dient, sowie sich quer zur Längsaufnahme 62 erstreckende Hakenaufnahmen 63. Auch hier ist also eine in Draufsicht etwa T-förmige Kontur gegeben.

Die Hakenaufnahmen 63 bilden insgesamt eine Zapfenkopfaufnahme 66 für den Zapfenkopf 46 aus. Zwischen der Längsaufnahme 62 und den beiden seitlich davon abstehenden Hakenaufnahmen 63 erstreckt sich eine Hakenkontur 67.

Wenn nunmehr die Steckvorsprünge 40, 41 in die Steckaufnahmen 60 und 61 entlang einer Steckachse S eingesteckt werden, gelangen die Hakenkonturen 67 und 47 miteinander in Eingriff, so dass die Steckvorsprünge 40, 41 in Längserstreckungsrichtung 25 des Querträgers 20 und/oder quer zur Steckachse S in zugfesten Eingriff bezüglich einer Zugachse Z miteinander kommen. Mithin sind also die Seitenträger 30, 31 quer am Querträger 20 zu dessen Längserstreckungsrichtung 25 anhand der Steckvorsprünge 40 und 41 und der zugehörigen Steckaufnahmen 60 und 61 formschlüssig festgelegt.

Die Steckvorsprünge 40 und 41 können sozusagen in die Steckaufnahmen 60 und 61 hinein gebogen werden, z.B. entlang der Steckachse S. Die Steckachse S kann auch einen um den Fußpunkt des Krümmungsabschnitts 42 verlaufenden bogenförmigen Verlauf haben.

Neben dem Krümmungsabschnitt 42 erstrecken sich noch Schlitze 45 zwischen dem Krümmungsabschnitt 42 und der Wand 39, was das Umbiegen bzw. Herstellen des Krümmungsabschnittes 42 erleichtert oder ermöglicht.

Die Zapfenköpfe 46 sind in der Art von Köpfen eines Puzzleteils ausgestaltet, d.h. sie weisen außen eine Rundung 53 auf. Auch die Steckvorsprünge 40, 41 insgesamt entsprechen in ihrer Grundkontur etwa einem Verbindungszapfen eines Puzzleteils, d.h. dass die Hakenkonturen 47 ebenfalls Rundungen 54 aufweisen bzw. ausgerundet sind. Komplementär dazu sind auch die Steckaufnahmen 60 und 61 ausgestaltet, d.h. sie haben im Bereich der Zapfenkopfaufnahme 66, also sozusagen am Boden der Steckaufnahme 60 und 61, eine Rundung 73 sowie im Bereich der Hakenkonturen 67 Rundungen 74.

Bereits durch die ineinander eingreifenden Längsschenkel 43 und Längsaufnahme 62 sowie die Hakenschenkel 44 und die Hakenaufnahme 63 sind die Steckvorsprünge 40, 41 nicht nur zugfest bezüglich der Zugachse Z mit dem Querträger 20 verbunden, sondern auch quer dazu, nämlich in Fahrzeuglängsrichtung oder in Richtung einer Scherachse U.

Eine zusätzliche, sichernde Maßnahme ist es, dass in einem Fußbereich 48 der Steckvorsprünge 40 und 41 eine bezüglich der Kraftbelastung in Richtung der Scherachse U wirksame Formschlusskontur 49 vorgesehen ist, zu der komplementär eine Formschlusskontur 69 an einem freien Endbereich 68 der Steckaufnahme 60, 61 vorhanden ist. Die Formschlusskontur 49 umfasst beispielsweise die vor die Wand 39 vorstehende Schmalseite oder Stirnseite der Krümmungsabschnitte 42. Die aufnehmende Formschlusskontur 69 umfasst beispielsweise vor die obere Wand 26 und die untere Wand 27 vorstehende Abschnitte der vorderen Wand 28 und der hinteren Wand 29 des Querträgers 20.

Eine sich am Außenumfang des Steckvorsprungs 40, 41 erstreckende Schmalseite bildet eine Kontaktfläche 52 zum Kontakt mit einer Kontaktfläche 72 der Steckaufnahme 60, 61. Die Kontaktfläche 52 umfasst Seitenwände 50 des Längsschenkels 43 sowie eine Stirnwand 51, die sich um den Zapfenkopf 46 herum erstreckt. Die Seitenwände 50 und die Stirnwand 51 sind jedoch nicht rechtwinkelig zur Oberseite und Unterseite des Steckvorsprungs 40, 41, sondern verlaufen schräg dazu.

Diese Schräge könnte beispielsweise dazu dienen, dass die Steckvorsprünge 40, 41 leicht entlang der Steckachse S in die Steckaufnahmen 60 und 61 eingesteckt werden können. Mithin könnte man diese Schrägen also auch als Einführschrägen nutzen oder bezeichnen.

Vorzugsweise dienen die Schrägen jedoch dazu, dass die Kontaktflächen 52 und 72 in relativ großflächigen Kontakt miteinander gelangen können.

Auch die Kontaktflächen 72 verlaufen nämlich schräg zur jeweiligen Oberseite und Unterseite derjenigen Wand 26 und 27, an der sie angeordnet sind. Die Schräge verläuft dabei von der Einsteckseite her, also der Außenseite des Querträgers 20, zum Innenraum hin im Sinne einer Verengung oder einer Rinne. Die einander zugewandten Seitenwände 70 der Längsaufnahme 62 sowie eine Boden Umfangswand 71, die die Zapfenkopfaufnahme 66 begrenzt, verlaufen dabei trichterförmig nach innen schräg geneigt.

Ferner sind eine sich neben dem Längsschenkel 43 erstreckende Stirnseite 55 des Fußbereich 48 mit einer Schrägneigung versehen, wobei sozusagen das Gegenstück, nämlich eine Stirnwand 76, die sich zwischen den Innenseiten der vorderen Abschnitte der Wände 28, 29 des Querträgers 20 und der Längsaufnahme 62 erstreckt, bezüglich der Oberseite und der Unterseite der Wand 26 oder 27 rechtwinkelig verläuft. Auch hier könnte eine komplementäre, schräg geneigte Kontaktfläche vorgesehen sein, was jedoch bei der in der Zeichnung dargestellten Variante nicht der Fall ist.

Im Übergangsbereich zwischen der Längsaufnahme 62 und der jeweils benachbarten Stirnwand 76, die sozusagen den Boden der Formschlussaufnahme für den Fußbereich 48 des Steckvorsprungs 40, 41 bildet, ist eine Rundung 77 vorgesehen, die zu der Rundung 56 komplementär passt.

Die schräg geneigten Kontaktflächen 52 und 72 gelangen in flächigen Kontakt miteinander, wenn die Steckvorsprünge 40, 41 in die Steckaufnahmen 60, 61 eingesteckt werden. Zwischen den Kontaktflächen 52 und 72 ist zweckmäßigerweise ein Stoffschluss vorhanden. Beispielsweise sind die Kontaktflächen 52 und 72 miteinander verklebt, verschweißt oder dergleichen. Beispielsweise kann dort eine Schweißnaht vorgesehen sein. Auch eine Verbindung anhand von Widerstandsschweißen ist vorteilhaft.

Eine Vergrößerung von Kontaktflächen zwischen Steckvorsprung und Steckaufnahme lässt sich auch durch eine Stufenanordnung realisieren. Beispielsweise könnte bei der Steckaufnahme 60 eine Stufe 75 vorgesehen sein, zum Beispiel in der Art einer Terrasse, die sozusagen als Auflagefläche in Steckrichtung S von oben für eine entsprechende, in der Zeichnung jedoch nicht dargestellte Gegenkontur oder Gegenfläche am Steckvorsprung 40 oder 41 im Bereich beispielsweise der Seitenwand 50 dient.

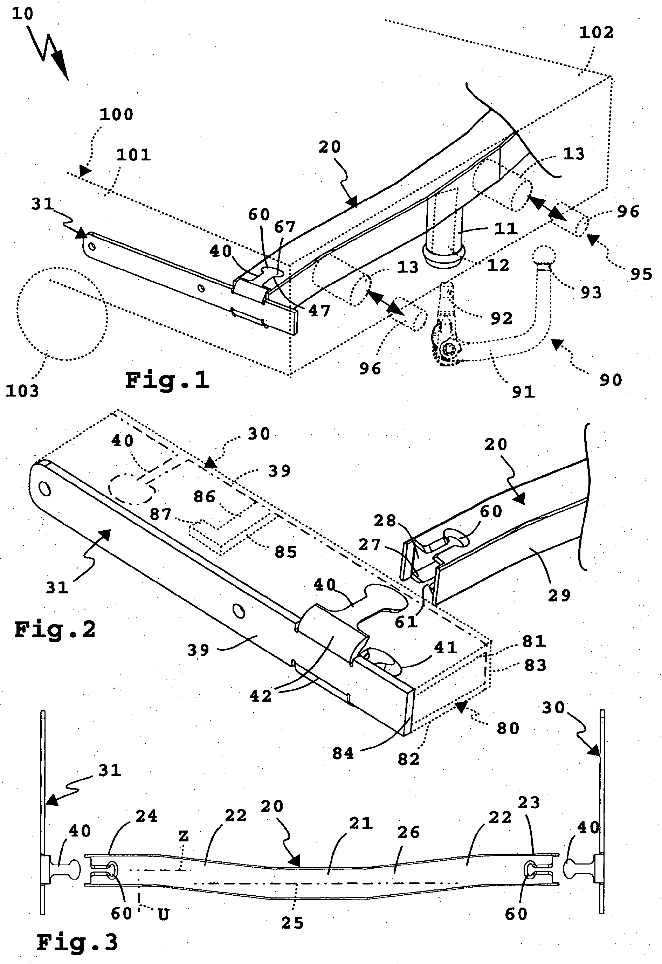

Eine günstige Herstellungsweise von mehreren erfindungsgemäßen Bauteilen ist anhand von Figur 2 schematisch angedeutet. Beispielsweise können die Seitenträger 30 und 31 aus einem Profilkörper 80 ausgeschnitten werden, zum Beispiel mithilfe eines Stanzwerkzeugs, eines thermischen Trennverfahrens, beispielsweise Laserschneidens, oder dergleichen. Selbstverständlich ist auch ein Ausschneiden mittels Wasserstrahl oder dergleichen ohne weiteres denkbar.

Eine obere Wand 81 und eine untere Wand 82 dienen dabei zur Herstellung der Steckvorsprünge 40 und 41, d.h. das Material der jeweiligen Wände 81 und 82 bleibt insoweit stehen, dass die Steckvorsprünge 40 und 41 ausgebildet sind. Die Krümmungsabschnitte 42 können beispielsweise durch Rundungen im Kantenbereich oder Eckbereich des Profilkörpers 80 dargestellt werden.

Die Wände 39 hingegen werden von Seitenwänden 83 und 84 des Profilkörpers 80 gebildet. Man erkennt, dass durch das komplementäre Herstellen mehrerer erfindungsgemäßer Bauteile aus einem einzigen Profilkörper sehr sparsam gearbeitet werden kann. Der Verlust an Material ist gering.

Beispielhaft sei auch erwähnt, dass selbstverständlich die Steckvorsprünge 40 und 41 nur exemplarisch zu verstehen sind. Beispielsweise könnte man auch einen Steckvorsprung in Gestalt eines Hakens 85 herstellen, der einen Längsschenkel 86 und einen davon seitlich abstehenden, beispielsweise rechtwinkelig abstehenden, Hakenschenkel 87 aufweist. Die Außenumfangskontur des Hakens 85 ist also in Draufsicht L-förmig.

Der Haken 85 hat kantig ausgeprägte Eckbereiche, ist also nicht ausgerundet. Eine Rundung wäre jedoch an sich selbstverständlich auch möglich.

Ferner können auch baumartige Hakenstrukturen gebildet werden, d.h. dass beispielsweise mehrere Hakenschenkel zur einen und/oder zur anderen Seite eines Längsschenkels eines erfindungsgemäß hergestellten Steckvorsprungs vorstehen. Die zugehörige Steckaufnahme hat dann ebenfalls eine Art Baumstruktur, d.h. im Bereich der Hakenvorsprünge, quasi der Seitenäste des Steckvorsprungs, sind korrespondierende Hakenaufnahmen vorgesehen. Auch hier können mehrere Hakenaufnahmen zur selben Seite von der Längsaufnahme seitlich weg verlaufen.

Weiterhin ist es selbstverständlich möglich, dass beispielsweise am Querträger Steckvorsprünge angeordnet sind, beispielsweise integral aus den Wänden 26-29 gebildet sind oder an diesen Wänden angeordnet sind und in Richtung des jeweiligen Seitenträgers vorstehen, der dann entsprechende Steckaufnahmen oder Hakenaufnahmen hat. Man kann sich zum Beispiel vorstellen, dass aus dem Profilkörper 80, also einem Hohlkörper, ein erfindungsgemäß ausgebildeter Seitenträger hergestellt wird, wobei die Seitenwand 84 eine Bodenwand und die beiden oberen und unteren Wände 81 und 82 jeweils einen Seitenschenkel dieses Seitenträgers bilden. Beispielsweise hat dieser Seitenträger an seiner oberen Wand 81 und/oder seiner unteren Wand 82 entsprechende Steckaufnahmen, in die die vom Querträger abstehenden Haken oder Zapfen eingehängt werden können.

Ferner sei exemplarisch anhand des nachfolgend noch näher beschriebenen Ausführungsbeispiel der Trägeranordnung 110 erläutert, dass man auch andere Anbauteile, beispielsweise eine Halterung 111 für den Kupplungsarm 91, in erfindungsgemäßer Weise mithilfe von Haken umfassenden Steckvorsprüngen befestigen kann. Beispielsweise stehen vom Querträger 120 Steckvorsprünge 175 ab, die in korrespondierende, schematisch angedeutete Steckaufnahmen 176 an der entsprechend modifizierten Halterung 111 eingreifen. Auch hier ist eine stoffschlüssige, zusätzliche Verbindung vorteilhaft, beispielsweise indem die Steckvorsprünge 175 mit den Hakenaufnahnien oder Steckaufnahmen 176 verklebt, verschweißt oder dergleichen anderweitig stoffschlüssig verbunden werden. Selbstverständlich könnte man auch alternativ oder zusätzlich jeweils noch ein sicherndes Niet oder Schraube vorsehen.

Bei der Trägeranordnung 110 sind die Seitenträger 130 und 131 anhand von jeweils paarweise vorgesehenen Steckvorsprüngen 140, 141, die in ebenfalls paarweise vorgesehene Steckaufnahmen 160 und 161 des Querträgers 120 eingreifen, mit dem Querträger 120 verbunden. Der grundsätzliche Aufbau der Steckvorsprünge 140 und 141 entspricht demjenigen der Steckvorsprünge 40 und 41, d.h. sie haben Längsschenkel 143 sowie Hakenschenkel 144 und stehen mit einem Krümmungsabschnitt 142 von der Wand 39 des Seitenträgers 131 und 130 ab.

An den freien Endbereichen der Steckvorsprünge 140 und 141 befinden sich Zapfenköpfe 146, das heißt dass zwischen den Längsschenkeln 143 und den beiden quer dazu abstehenden Hakenschenkeln 144 Hakenkonturen 147 ausgebildet sind.

Die Steckaufnahmen 160 und 161 sind dazu komplementär, d.h. sie haben jeweils eine schlitzartige Längsaufnahme 162, von der seitlich zwei Arme oder Schenkel, nämlich Hakenaufnahmen 163, abstehen. Zwischen den Längsaufnahmen 162 und den seitlich davon abstehenden Hakenaufnahmen 163 sind Hakenkonturen 167 ausgebildet.

Die Hakenaufnahmen 163 bilden eine Zapfenkopfaufnahme 166 zur Aufnahme des jeweiligen Zapfenkopfs 146.

Wenn die Hakenkonturen 147 und 167 miteinander in Eingriff sind, sind die Steckvorsprünge 140, 141 in den Steckaufnahmen 160 und 161 in Richtung der Zugachse Z zugfest eingehakt und festgelegt.

Die Seitenwände 150 der Längsschenkel 143 sowie die vordere, umfangsseitige um die Hakenschenkel 144 bzw. den Zapfenkopf 146 herum verlaufende Stirnwand 151 sind rechtwinkelig zur Oberseite und Unterseite des jeweiligen Steckvorsprungs 140 und 141. Mithin ist also im Gegensatz zu den Steckvorsprüngen 40 und 41 keine Schräge vorhanden. Auch die innen Umfangswand oder Stirnwand der Steckaufnahmen 160 und 161, nämlich Seitenwände 170 sowie Bodenumfangswände 171, sind entsprechend rechtwinkelig. Dennoch kann eine stoffschlüssige Verbindung zweckmäßig sein, d.h. dass beispielsweise zwischen die Seitenwände 150 und 170 bzw. die Stirnwand 151 und die Bodenumfangswand 171 Klebstoff eingebracht ist.

Die Längsschenkel 143 und die Längsaufnahmen 162 verlaufen jeweils parallel zueinander.

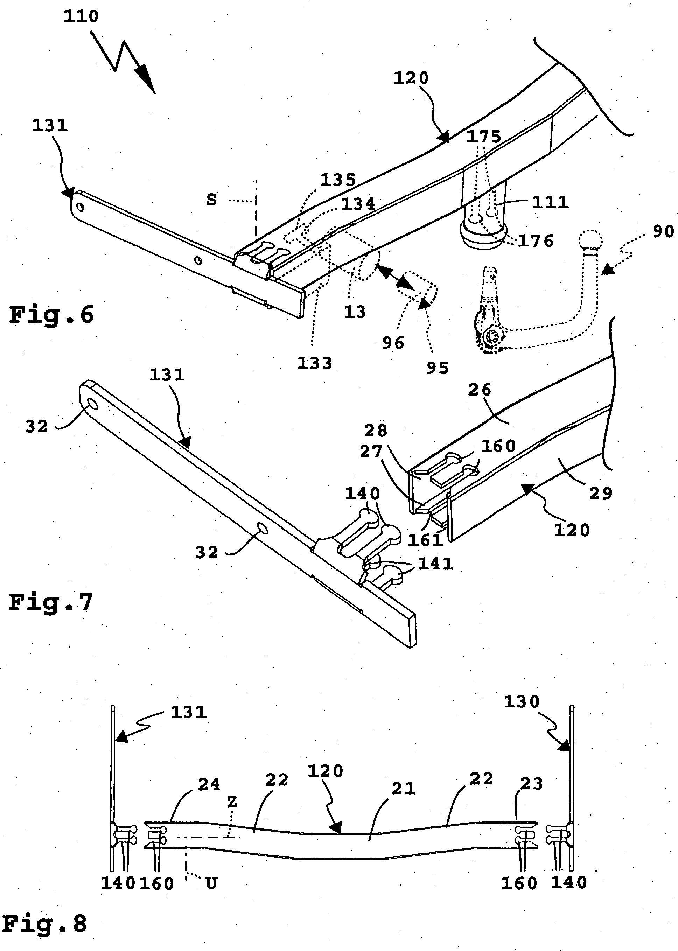

An dieser Stelle sei erwähnt, dass man beispielsweise auch eine Verzapfung oder Verbindung über Eck im Sinne der Erfindung ohne weiteres herstellen könnte, d.h. dass beispielsweise die Längsaufnahmen und korrespondierend die Längsschenkel erfindungsgemäßer Steckaufnahmen und Steckvorsprünge auch winkelig zueinander verlaufen können. Auf diesem Wege wird eine besonders feste Verbindung zwischen den Bauteilen hergestellt. Beispielsweise ist in Figur 6 angedeutet, dass ein vorderer Abschnitt 133 des Seitenträgers 131 zur Wand 39 abgewinkelt verläuft, so dass er parallel zur hinteren Wand 29 des Querträgers 120 verläuft. Beispielsweise ist dort ein formschlüssiger oder stoffschlüssige Kontakt gegeben. Man könnte die Bauteile beispielsweise im Überlappungsbereich des Abschnitts 133 mit dem Querträger 120 verschrauben oder verschweißen oder auch ein Niet oder eine Schraube oder mehrere davon anbringen.

Von dem Abschnitt 133 steht ein Haken-Steckvorsprung 134 ab, der in eine Haken-Steckaufnahme 135, beispielsweise an der oberen Wand 26 des Querträgers 120, eingehakt ist. Auch hier ist eine zusätzliche stoffschlüssige oder formschlüssige Verbindung mit beispielsweise Klebstoff und/oder einer Schraube und/oder einer Nietverbindung zweckmäßig, um den Steckvorsprung 134 mit der Steckaufnahme 135 noch fester zu verbinden, d.h. ein Herausziehen in Richtung der Steckachse S zu verhindern.

An einem Fußbereich 148 der Steckvorsprünge 140 und 141, die quasi an einem gemeinsamen Krümmungsabschnitt 142 angeordnet sind, ist weiterhin eine der Formschlusskontur 49 entsprechende Formschlusskontur 149 vorgesehen, die in Eingriff mit einer korrespondierenden Formschlusskontur 169 an den Längsenden 23 und 24 des Querträgers 120 gelangen kann und einen zusätzlich sichernden Formschluss in Richtung der Scherachse U bildet.

## Patentansprüche

1. Trägeranordnung für eine Anhängekupplung (90) oder einen Lastenträger (95), als Bauteile umfassend einen Querträger (20; 120) und mindestens eine an dem Querträger (20; 120) angeordnete Halterung (11, 13; 111) für eine Anhängekupplung (90) oder für ein Kupplungsteil eines Lastenträgers (95) und gegebenenfalls mit dem Querträger (20; 120) verbundene Seitenträger (30, 31; 130, 131) zur Montage an einem Heck einer Karosserie eines Fahrzeugs, wobei mindestens zwei der Bauteile der Trägeranordnung (10; 110) oder mindestens zwei von deren Bauteilkomponenten durch eine Steckverbindung miteinander verbunden sind, wobei ein vor das eine Bauteil oder die eine Bauteilkomponente vorstehender Steckvorsprung (40, 41; 140, 141) in eine Steckaufnahme (60, 61; 160, 161) des anderen Bauteils oder der anderen Bauteilkomponente eingreift **dadurch gekennzeichnet, dass** der Steckvorsprung (40, 41; 140, 141) und die Steckaufnahme (60, 61; 160, 161) Hakenkonturen (47, 67; 147, 167) zum Verhaken des Steckvorsprungs (40, 41; 140, 141) in der Steckaufnahme (60, 61; 160, 161) aufweisen.

2. Trägeranordnung nach Anspruch 1, **dadurch gekennzeichnet, dass** der Steckvorsprung (40, 41; 140, 141) einen Längsschenkel (43; 143) und mindestens einen quer von dem Längsschenkel (43; 143) seitlich abstehenden Hakenschenkel (44; 144) aufweist und die Steckaufnahme (60, 61; 160, 161) eine Längsaufnahme (62; 162) für den Längsschenkel (43; 143) und eine Hakenaufnahme (63; 163) für den Hakenschenkel (44; 144) aufweist.

3. Trägeranordnung nach Anspruch 2, **dadurch gekennzeichnet, dass** der Steckvorsprung (40, 41; 140, 141) zwei an einander entgegengesetzten Seiten und/oder zwei an der derselben Seite des Längsschenkels (43; 143) angeordnete Hakenschenkel (44; 144) aufweist und/oder die Steckaufnahme (60, 61; 160, 161) einander gegenüberliegende Hakenaufnahmen (63; 163) oder mindestens zwei an derselben Seite der Längsaufnahme (62; 162) angeordnete Hakenaufnahmen (63; 163) aufweist.

4. Trägeranordnung nach einem der vorhergehenden Ansprüche, **dadurch gekennzeichnet, dass** ein Außenumfang des Steckvorsprungs (40, 41; 140, 141), insbesondere im Bereich seines freien Endes, eine Rundung aufweist.

5. Trägeranordnung nach einem der vorhergehenden Ansprüche, **dadurch gekennzeichnet, dass** der Steckvorsprung (40, 41; 140, 141) einen Zapfen, insbesondere in der Art eines Zapfens eines Puzzleteils, und die Steckaufnahme (60, 61; 160, 161) eine Zapfenaufnahme umfasst.

6. Trägeranordnung nach einem der vorhergehenden Ansprüche, **dadurch gekennzeichnet, dass** der Steckvorsprung (40, 41; 140, 141) eine plattenartige oder stangenartige Verbindungslasche bildet.

7. Trägeranordnung nach einem der vorhergehenden Ansprüche, **dadurch gekennzeichnet, dass** die Steckaufnahme (60, 61; 160, 161) und der Steckvorsprung (40, 41; 140, 141) abseits der Hakenkonturen (47, 67; 147, 167) mindestens ein weiteres, insbesondere an einem Fußbereich (48; 148) des Steckvorsprungs (40, 41; 140, 141) und einem freien Endbereich der Steckaufnahmen (60, 61; 160, 161) angeordnetes, Formschlusskonturpaar (49, 69; 149; 169) aufweisen, das einen Halt der miteinander durch die Steckverbindung verbundenen Bauteile quer zu einer Steckachse (S), entlang derer die Hakenkonturen (47, 67; 147, 167) in Eingriff bringbar sind, bereitstellt.

8. Trägeranordnung nach einem der vorhergehenden Ansprüche, **dadurch gekennzeichnet, dass** der Steckvorsprung (40, 41; 140, 141) einen Bestandteil einer Biegelasche bildet, die mindestens zwei zueinander winkelige Laschenabschnitte und/oder einen gekrümmten oder bogenförmigen Krümmungsabschnitt (42; 142) und einen Laschenabschnitt aufweist.

9. Trägeranordnung nach einem der vorhergehenden Ansprüche, **dadurch gekennzeichnet, dass** der Steckvorsprung (40, 41; 140, 141) und die Steckaufnahme (60, 61; 160, 161) mindestens ein Paar quer zu der Steckachse (S), entlang derer die Hakenkonturen (47, 67; 147, 167) ineinander einsteckbar sind, verlaufende Kontaktflächen (52, 72) aufweisen, die einander gegenüberliegen, wenn der Steckvorsprung (40, 41; 140, 141) in die Steckaufnahmen (60, 61; 160, 161) eingesteckt ist.

10. Trägeranordnung nach Anspruch 9, **dadurch gekennzeichnet, dass** die Kontaktflächen (52, 72) schräg zu der Steckachse (S) verlaufen und/oder die Kontaktflächen (52, 72) eine Stufenanordnung (75) von Flächen umfassen.

11. Trägeranordnung nach Anspruch 9, **dadurch gekennzeichnet, dass** der Steckvorsprung (40, 41; 140, 141) mit der Steckaufnahme (60, 61; 160, 161) durch eine zusätzliche formschlüssige Komponente, insbesondere ein Niet und/oder eine Schraube, und/oder stoffschlüssig verbunden ist, wobei die stoffschlüssige Verbindung zweckmäßigerweise eine Verschweißung und/oder eine Verklebung und/oder eine Lötverbindung umfasst.

12. Trägeranordnung nach Anspruch 11, **dadurch gekennzeichnet, dass** die stoffschlüssige Verbindung gegen eine Bewegung des Steckvorsprungs (40, 41; 140, 141) im Sinne eines Lösens in Richtung einer Steckachse (S) wirksam ist, entlang derer der Steckvorsprung (40, 41; 140, 141) und die Steckaufnahme (60, 61; 160, 161) in Eingriff miteinander bringbar sind.

13. Trägeranordnung nach einem der vorhergehenden Ansprüche, **dadurch gekennzeichnet, dass** der Steckvorsprung (40, 41; 140, 141) mindestens eine nicht rechtwinkelig schräg zu einer nicht in Kontakt mit der Steckaufnahme (60, 61; 160, 161) kommenden Oberfläche verlaufende und/oder eine an einer Stufe (75) gebildete Kontaktfläche (52) aufweist und die Steckaufnahme (60, 61; 160, 161) eine zu einem flächigen Kontakt mit der Kontaktfläche (52) vorgesehene Gegenkontaktfläche (72) aufweist.

14. Trägeranordnung nach einem der vorhergehenden Ansprüche, **dadurch gekennzeichnet, dass** sie mindestens ein Paar von Steckverbindungen bestehend aus Steckvorsprung (40, 41; 140, 141) und Steckaufnahme (60, 61; 160, 161) aufweist, deren jeweilige Längsschenkel und Längsaufnahmen zueinander parallel oder winkelig verlaufen.

15. Trägeranordnung nach einem der vorhergehenden Ansprüche, **dadurch gekennzeichnet, dass** der Steckvorsprung (40, 41; 140, 141) oder die Steckaufnahme (60, 61; 160, 161) mit einem Grundkörper desjenigen Bauteils, an dem sie angeordnet sind, einstückig sind, insbesondere aus einem Profilkörper als Rohling hergestellt sind.

## Claims

1. Support assembly for a trailer coupling (90) or a load carrier (95) comprising as components a cross-member (20; 120) and at least one holder (11, 13; 111) located on the cross-member (20; 120) for a trailer coupling (90) or for a coupling part of a load carrier (95), and further, if applicable, comprising side members (30, 31; 130, 131) joined to the cross-member (20; 120) for mounting on the rear end of a body of a vehicle, wherein at least two of the components of the support assembly (10; 110) or at least two of the parts thereof are connected to each other by a plug-and-socket connector, wherein a plug-in projection (40, 41; 140, 141) projecting in front of the one component or the one component part engages with a plug-in receptacle (60, 61; 160, 161) of the other component or the other component part, **characterised in that** the plug-in projection (40, 41; 140, 141) and the plug-in receptacle (60, 61; 160, 161) have hook contours (47, 67; 147, 167) for hooking the plug-in projection (40, 41; 140, 141) into the plug-in receptacle (60, 61; 160, 161).

2. Support assembly according to claim 1, **characterised in that** the plug-in projection (40, 41; 140, 141) comprises a longitudinal leg (43; 143) and at least one hook leg (44; 144), which laterally projects from the longitudinal leg (43; 143), and **in that** the plug-in receptacle (60, 61; 160, 161) comprises a longitudinal receptacle (62; 162) for the longitudinal leg (43; 143) and a hook receptacle (63; 163) for the hook leg (44; 144).

3. Support assembly according to claim 2, **characterised in that** the plug-in projection (40, 41; 140, 141) comprises two hook legs (44; 144) arranged on opposite sides and/or on the same side of the longitudinal leg (43; 143), and/or **in that** the plug-in receptacle (60, 61; 160, 161) comprises hook receptacles (63; 163) arranged opposite one another or at least two hook receptacles (63; 163) arranged on the same side of the longitudinal receptacle (62; 162).

4. Support assembly according to any of the preceding claims, **characterised in that** an outer circumference of the plug-in projection (40, 41; 140, 141) has a curvature, in particular in the region of its free end.

5. Support assembly according to any of the preceding claims, **characterised in that** the plug-in projection (40, 41; 140, 141) comprises a tab, in particular in the manner of a tab of a jigsaw part, and **in that** the plug-in receptacle (60, 61; 160, 161) comprises a tab receptacle

6. Support assembly according to any of the preceding claims, **characterised in that** the plug-in projection (40, 41; 140, 141) forms a plate-like or rod-like connecting tab.

7. Support assembly according to any of the preceding claims, **characterised in that**, away from the hook contours (47, 67; 147, 167), the plug-in receptacle (60, 61; 160, 161) and the plug-in projection (40, 41; 140, 141) comprise, in particular in a foot region of the plug-in projection (40, 41; 140, 141) and in a free end region of the plug-in receptacle (60, 61; 160, 161), a further pair of interlocking contours (49, 69; 149, 169), which provides a hold for the connected components across a plug-in axis (S) along which the hook contours (47, 67; 147, 167) can be brought into engagement.

8. Support assembly according to any of the preceding claims, **characterised in that** the plug-in projection (40, 41; 140, 141) forms a part of a bending tab which comprises at least two tab sections oriented at an angle to each other and/or a curved or arcuate curvature section and a tab section.

9. Support assembly according to any of the preceding claims, **characterised in that** the plug-in projection (40, 41; 140, 141) and the plug-in receptacle (60, 61; 160, 161) have at least one pair of contact surfaces (52, 72), which extend across the plug-in axis (S) along which the hook contours (47, 67; 147, 167) can be plugged into one another, and which lie opposite one another if the plug-in projection (40, 41; 140, 141) is plugged into the plug-in receptacle (60, 61; 160, 161).

10. Support assembly according to claim 9, **characterised in that** the contact surfaces (52, 72) extend at an angle to the plug-in axis (S), and/or **in that** the contact surfaces (52, 72) comprise a step arrangement (75) of surfaces.

11. Support assembly according to claim 9, **characterised in that** the plug-in projection (40, 41; 140, 141) is connected to the plug-in receptacle (60, 61; 160, 161) by an additional interlocking component, in particular a rivet and/or a screw, or by adhesive force, the connection by adhesive force expediently comprising a welded joint and/or an adhesive bond and/or a soldered joint.

12. Support assembly according to claim 11, **characterised in that** the connection by adhesive force acts against a movement of the plug-in projection (40, 41; 140, 141) in the sense of a release in the direction of a plug-in axis (S) along which the plug-in projection (40, 41; 140, 141) and the plug-in receptacle (60, 61; 160, 161) can be brought into engagement with each other.

13. Support assembly according to any of the preceding claims, **characterised in that** the plug-in projection (40, 41; 140, 141) has at least one contact surface (52), which extends at an angle other than a right angle to a surface not coming into contact with the plug-in receptacle (60, 61; 160, 161) and/or is formed at a step (75), and **in that** the plug-in receptacle (60, 61; 160, 161) has a mating contact surface (72) provided for surface contact with the contact surface (52).

14. Support assembly according to any of the preceding claims, **characterised in that** it comprises at least one pair of plug-and-socket connectors consisting of a plug-in projection (40, 41; 140, 141) and a plug-in receptacle (60, 61; 160, 161), the longitudinal legs and longitudinal receptacles of which extend parallel or at an angle to one another.

15. Support assembly according to any of the preceding claims, **characterised in that** the plug-in projection (40, 41; 140, 141) or the plug-in receptacle (60, 61; 160, 161) are produced integrally with a base body of the component on which they are located, being in particular produced as a blank from a profiled body.

## Revendications

1. Ensemble de support pour un attelage de remorque (90) ou pour un support de charges (95), comprenant en tant qu'éléments, un support transversal (20 ; 120) et au moins une fixation (11, 13 ; 111) disposée au niveau du support transversal (20 ; 120) pour un attelage de remorque (90) ou pour une partie de couplage d'un support de charges (95) et, comprenant le cas échéant, des supports latéraux (30, 31 ; 130, 131) reliés au support transversal (20 ; 120), servant au montage au niveau d'un hayon d'une carrosserie d'un véhicule, sachant qu'au moins deux des éléments de l'ensemble de support (10 ; 110) ou au moins deux des composants d'élément de ce dernier sont reliés entre eux par un système d'assemblage par enfichage, sachant qu'une partie faisant saillie d'enfichage (40, 41 ; 140, 141) faisant saillie devant l'un des éléments ou l'un des composants d'élément vient en prise avec un logement d'enfichage (60, 61 ; 160, 161) de l'autre élément ou de l'autre composant d'élément, **caractérisé en ce que** la partie faisant saillie d'enfichage (40, 41 ; 140, 141) et le logement d'enfichage (60, 61 ; 160, 161) présentent des contours à crochet (47, 67 ; 147, 167) servant à accrocher la partie faisant saillie d'enfichage (40, 41 ; 140, 141) dans le logement d'enfichage (60, 61 ; 160, 161).

2. Ensemble de support selon la revendication 1, **caractérisé en ce que** la partie faisant saillie d'enfichage (40, 41 ; 140, 141) présente une branche longitudinale (43; 143) et au moins une branche à crochet (44; 144) dépassant latéralement de manière transversale de la branche longitudinale (43 ; 143), et **en ce que** le logement d'enfichage (60, 61 ; 160, 161) présente un logement longitudinal (62 ; 162) pour la branche longitudinale (43 ; 143) et un logement de crochet (63 ; 163) pour la branche à crochet (44 ; 144).

3. Ensemble de support selon la revendication 2, **caractérisé en ce que** la partie faisant saillie d'enfichage (40, 41 ; 140, 141) présente deux côtés opposés l'un à l'autre et/ou deux branches à crochet (44 ; 144) disposées au niveau du même côté que la branche longitudinale (43 ; 143), et/ou **en ce que** le logement d'enfichage (60, 61 ; 160, 161) présente de logements de crochet (63 ; 163) opposés les uns aux autres ou au moins deux logements de crochet (63 ; 163) disposés au niveau du même côté que le logement longitudinal (62 ; 162).

4. Ensemble de support selon l'une quelconque des revendications précédentes, **caractérisé en ce qu'**une périphérie extérieure de la partie faisant saillie d'enfichage (40, 41 ; 140, 141) présente, en particulier dans la zone de son extrémité libre, un arrondi.

5. Ensemble de support selon l'une quelconque des revendications précédentes, **caractérisé en ce que** la partie faisant saillie d'enfichage (40, 41 ; 140, 141) comprend un tourillon, en particulier à la manière d'un tourillon d'une partie de puzzle, et **en ce que** le logement d'enfichage (60, 61 ; 160, 161) comprend un logement de tourillon.

6. Ensemble de support selon l'une quelconque des revendications précédentes, **caractérisé en ce que** la partie faisant saillie d'enfichage (40, 41 ; 140, 141) forme une bride d'assemblage à la manière d'une plaque ou d'une barre.

7. Ensemble de support selon l'une quelconque des revendications précédentes, **caractérisé en ce que** le logement d'enfichage (60, 61 ; 160, 161) et la partie faisant saillie d'enfichage (40, 41 ; 140, 141) présentent, à l'écart des contours à crochet (47, 67 ; 147, 167), au moins une autre paire de contours à complémentarité de forme (49, 69; 149; 169) disposée en particulier au niveau d'une zone de pied (48 ; 148) de la partie faisant saillie d'enfichage (40, 41 ; 140, 141) et au niveau d'une zone d'extrémité libre du logement d'enfichage (60, 61 ; 160, 161), laquelle fournit un maintien des éléments reliés les uns aux autres par le système d'assemblage par enfichage de manière transversale par rapport à un axe d'enfichage (S), le long duquel les contours à crochet (47, 67 ; 147, 167) peuvent être amenés en prise.

8. Ensemble de support selon l'une quelconque des revendications précédentes, **caractérisé en ce que** la partie faisant saillie d'enfichage (40, 41 ; 140, 141) forme un composant essentiel d'une bride flexible, qui présente au moins deux sections de bride formant un coude l'une par rapport à l'autre et/ou une section d'incurvation (42 ; 142) incurvée ou en forme d'arc et une section de bride.

9. Ensemble de support selon l'une quelconque des revendications précédentes, **caractérisé en ce que** la partie faisant saillie d'enfichage (40, 41 ; 140, 141) et le logement d'enfichage (60, 61 ; 160, 161) présentent au moins une paire de faces de contact (52, 72) s'étendant de manière transversale par rapport à l'axe d'enfichage (S), le long duquel les contours à crochet (47, 67 ; 147, 167) peuvent être enfichés les uns dans les autres, lesquelles faces de contact se font face lorsque la partie faisant saillie d'enfichage (40, 41 ; 140, 141) est enfichée dans le logement d'enfichage (60, 61 ; 160, 161).

10. Ensemble de support selon la revendication 9, **caractérisé en ce que** les faces de contact (52, 72) s'étendent de manière oblique par rapport à l'axe d'enfichage (S), et/ou **en ce que** les faces de contact (52, 72) comprennent un ensemble à paliers (75) de faces.

11. Ensemble de support selon la revendication 9, **caractérisé en ce que** la partie faisant saillie d'enfichage (40, 41 ; 140, 141) est reliée au logement d'enfichage (60, 61 ; 160, 161) par un composant supplémentaire à complémentarité de forme, en particulier par un rivet et/ou une vis, et/ou par liaison de matière, sachant que la liaison par matière comprend de manière appropriée un assemblage par soudage et/ou par collage et/ou par brasage.

12. Ensemble de support selon la revendication 11, **caractérisé en ce que** l'assemblage par liaison de matière est efficace à l'encontre d'un déplacement de la partie faisant saillie d'enfichage (40, 41 ; 140, 141) au sens d'une séparation en direction d'un axe d'enfichage (S), le long duquel la partie faisant saillie d'enfichage (40, 41 ; 140, 141) et le logement d'enfichage (60, 61 ; 160, 161) peuvent être amenés en prise l'un avec l'autre.

13. Ensemble de support selon l'une quelconque des revendications précédentes, **caractérisé en ce que** la partie faisant saillie d'enfichage (40, 41 ; 140, 141) présente au moins une face de contact (52) ne s'étendant pas de manière oblique à angle droit par rapport à une surface ne venant pas en contact avec le logement d'enfichage (60, 61 ; 160, 161) et/ou formée au niveau d'un palier (75), et **en ce que** le logement d'enfichage (60, 61 ; 160, 161) présente une face de contact complémentaire (72) prévue par rapport à un contact à plat avec la face de contact (52).

14. Ensemble de support selon l'une quelconque des revendications précédentes, **caractérisé en ce qu'**il présente au moins une paire de systèmes d'assemblage par enfichage constituée d'une partie faisant saillie d'enfichage (40, 41 ; 140, 141) et d'un logement d'enfichage (60, 61 ; 160, 161), dont les branches longitudinales respectives et les logements longitudinaux s'étendent de manière parallèle ou selon l'un angle les uns par rapport aux autres.

15. Ensemble de support selon l'une quelconque des revendications précédentes, **caractérisé en ce que** la partie faisant saillie d'enfichage (40, 41 ; 140, 141) ou le logement d'enfichage (60, 61 ; 160, 161) sont d'un seul tenant avec un corps de base de l'élément, au niveau duquel précisément ils sont disposés, en particulier sont fabriqués en tant qu'ébauches à partir d'un corps profilé.
